# EUROPEAN PATENT APPLICATION

(11) **EP 4 825 654 A1**
(43) Date of publication of application: **21.10.2026**
(21) Application number: 26173081.6
(22) Date of filing: 17.04.2026
(51) Int. Cl.: B60N 2/02, B60N 2/06, B60N 2/10, B60N 2/20, B60N 2/22, B60N 2/30, B60N 2/34

(54) **SEAT FRAME OF MEANS OF TRANSPORTATION**

(30) Priority: 18.04.2025 CN 202510491461
(71) Applicant: Yanfeng International Automotive Technology Co., Ltd., Shanghai 201306 (CN)
(72) Inventor: TAN, Xuyang, Shanghai, 201315 (CN); ZHU, Guoli, Shanghai, 201315 (CN); ZHONG, Wei, Shanghai, 201315 (CN); LAN, Shunqiang, Shanghai, 201315 (CN)
(74) Representative: Reitstötter Kinzebach

(57) **Abstract**

A seat frame of a means of transportation is provided. The seat frame comprises a seat frame assembly, a backrest assembly and a side-moving sliding rail. The seat frame further comprises a driving mechanism comprising: a first driving mechanism configured to drive the seat frame assembly to rotate to a folded position relative to the side-moving sliding rail; a second driving mechanism configured to drive the seat frame assembly to rotate to a zeropressure position relative to the side-moving sliding rail; and a third driving mechanism configured to drive the seat frame assembly to move along the side-moving sliding rail to a side-moved position in a side-moving direction. The seat frame realizes multi-directional adjustment function of the seat frame by integrating different driving mechanisms, and the adjustments in each direction do not interfere with each other within a limited space.

## Description

### FIELD

The present disclosure relates to the field of accessories for a means of transportation, and more particularly to a seat frame for a means of transportation.

### BACKGROUND

With the continuously increasing functional and comfort requirements of consumers for means of transportation, in order to improve riding comfort for vehicle occupants, for example, vehicle seats have been designed with various adjustable functions such as tilting angle adjustment of a backrest (folding or turning into a bed), front-rear movement of a cushion, zero-pressure adjustment of the cushion, etc., thus allowing the occupants to flexibly adjust different postures of the seat according to different requirements to obtain optimal comfort.

However, the existing vehicle seat has many components to realize the above functions, and the structure is complex. In addition, there is interference with the adjacent components in the vehicle during use, which affects the comfort of the occupants.

### SUMMARY

An object of the present disclosure is to provide a seat frame, so as to solve problems in the prior art. The seat frame integrates the functions of folding or turning of a backrest, zero-pressure adjustment and lateral movement of a cushion, which improves the comfort of the seat and has the advantages of simple structure, reliable operation, easy operation and low cost.

To this end, according to the present disclosure, a seat frame of a means of transportation is provided. The seat frame comprises a seat frame assembly, a backrest assembly and a side-moving sliding rail. The seat frame further comprises a driving mechanism, and the driving mechanism comprises: a first driving mechanism configured to drive the seat frame assembly to rotate relative to the side-moving sliding rail to a folded position; a second driving mechanism configured to drive the seat frame assembly to rotate relative to the side-moving sliding rail to a zero-pressure position; and a third driving mechanism configured to drive the seat frame assembly to move along the side-moving sliding rail in a side-moving direction to a side-moved position.

According to the above technical concept, the present disclosure may further include any one or more of the following alternative forms.

In some alternative forms, the seat frame assembly comprises a seat frame side plate, a vertical plate fixedly connected with an upper sliding rail of the side-moving sliding rail, and a pair of connecting rod assemblies arranged opposite each other, each connecting rod assembly comprises a first connecting rod and a second connecting rod respectively pivotally connected with the seat frame side plate, and a third connecting rod pivotally connected with the first connecting rod, the second connecting rod is pivotally connected with the vertical plate, and the third connecting rod is capable of being rotated relative to the vertical plate.

In some alternative forms, two third connecting rods of the pair of connecting rod assemblies are fixedly connected by a coupling rod, and the coupling rod is pivotally connected with the vertical plate.

In some alternative forms, the third connecting rod is connected with the second driving mechanism through a transmission mechanism, and in a vertical direction, a position of the second driving mechanism is lower than that of the third driving mechanism so as to avoid interference between the third driving mechanism and the second driving mechanism when the third driving mechanism moves along the side-moving sliding rail together with the seat frame assembly in the side-moving direction.

In some alternative forms, the transmission mechanism comprises a connecting component fixedly connected with the coupling rod, an adapter piece pivotally connected with the second driving mechanism and a linkage rod fixedly connected with one of the connecting component and the adapter piece and slidably connected with the other of the connecting component and the adapter piece; and wherein when the second driving mechanism drives the adapter piece to rotate, the third connecting rod is driven to rotate, and when the third driving mechanism drives the third connecting rod to move in the side-moving direction, the connecting component is driven to move relative to the adapter piece in the side-moving direction.

In some alternative forms, one of the connecting component and the adapter piece is provided with a sliding groove, and the linkage rod passes through the sliding groove and is fixedly connected with the other of the connecting component and the adapter piece.

In some alternative forms, a bearing sleeve is arranged on the linkage rod or in the sliding groove.

In some alternative forms, the second driving mechanism is mounted on a mounting bracket fixedly connected with a lower sliding rail of the side-moving sliding rail, the adapter piece is pivotally connected with the mounting bracket, and the second driving mechanism drives the adapter piece to rotate relative to the mounting bracket.

In some alternative forms, the second driving mechanism comprises a motor, a screw rod connected with the motor and a push rod threadedly connected with the screw rod, the push rod is pivotally connected with the adapter piece, the motor drives the screw rod to rotate and drives the push rod to move on the screw rod so as to make the adapter piece rotate.

In some alternative forms, the second driving mechanism comprises a motor, a gear connected with an output shaft of the motor and a rack connected with the adapter piece, the gear is engaged with the rack, and the motor drives the gear to rotate so as to drive the adapter piece to rotate by movement of the rack.

In some alternative forms, the second driving mechanism comprises a motor, a gear connected with an output shaft of the motor and a toothed plate connected with the adapter piece, the gear is engaged with the toothed plate, and the motor drives the gear to rotate so as to drive the adapter piece to rotate by rotation of the toothed plate.

In some alternative forms, the second driving mechanism is mounted on a lower sliding rail of the side-moving sliding rail, and the third driving mechanism is mounted on an upper sliding rail of the side-moving sliding rail.

In some alternative forms, the third connecting rod is pivotally connected with the vertical plate by an angle adjuster.

In some alternative forms, the second driving mechanism comprises a direct-drive motor, and the direct-drive motor is connected with the angle adjuster through a synchronous rod for driving the angle adjuster to rotate so as to drive the third connecting rod to rotate relative to the vertical plate.

In some alternative forms, the second driving mechanism is fixedly mounted on the vertical plate or mounted on an upper sliding rail of the side-moving sliding rail, and the third driving mechanism is mounted on a lower sliding rail of the side-moving sliding rail.

In some alternative forms, the first driving mechanism comprises a motor, a gear connected with an output shaft of the motor and a rack connected with the first connecting rod or the second connecting rod, the gear is engaged with the rack, and the motor drives the gear to rotate so as to drive the first connecting rod or the second connecting rod to rotate by movement of the rack, such that the seat frame assembly rotates to the folded position.

In some alternative forms, the third driving mechanism comprises a motor and a gearbox, the gearbox is connected with the motor through a flexible shaft and is connected with a screw rod arranged in the side-moving sliding rail, the motor drives the gearbox to move relative to the screw rod so that the seat frame assembly moves along the side-moving sliding rail in the side-moving direction.

In some alternative forms, the backrest assembly is pivotally connected with the side-moving sliding rail so that the movement of the seat frame assembly and the movement of the backrest assembly are independent from each other.

The seat frame of the present disclosure realizes multi-directional adjustment function of the seat frame by integrating different driving mechanisms, and the adjustments in each direction do not interfere with each other within a limited space. For example, the first driving mechanism can realize that the seat frame assembly rotates relative to the side-moving sliding rail to be in the folded position, so that the backrest assembly is facilitated to be folded downwardly at a small angle closer to the seat frame assembly into a folded posture when being folded; or the second driving mechanism can realize that the seat frame assembly rotates relative to the side-moving sliding rail to be in the zero-pressure position, thereby the backrest assembly is in a zero-pressure posture to provide uniform and comfortable support for occupants while the backrest assembly is turned away from the seat frame assembly, making parts of the occupant's body that are in contact with the seat for a long time in a lying-flat posture be in a zero-pressure suspension state without pressure, reducing body pressure; and the third driving mechanism can make the seat frame assembly move along the side-moving sliding rail in the side-moving direction to be in the side-moving position, thereby realizing a lateral movement function, allowing a large bed scenario to be realized by combining with rear seats when in the folded posture, and avoiding interference with periphery structural components when in the zero-pressure posture, ensuring stability and comfort during use. The seat frame of the present disclosure is compact, simple and reliable, and cost-effective, which can be applied to various occasions to meet the diversified requirements of users.

### BRIEF DESCRIPTION OF THE DRAWINGS

Other features and advantages of the present disclosure will be better understood from the following detailed description of alternative embodiments in conjunction with the accompanying drawings, wherein like reference numerals identify the same or similar components, and in which:
FIG. 1A is a schematic view of a vehicle seat, illustrating two seats arranged in parallel and being in a design posture;
FIG. 1B is a schematic view of the vehicle seat in FIG. 1A being in a normal folded posture;
FIG. 2 is a side schematic view of a seat frame being in a design posture according to an embodiment of the present disclosure;
FIG. 3 is a schematic view of a seat frame assembly of the seat frame being in the design posture in FIG. 2;
FIG. 4 is an exploded view of the seat frame assembly;
FIG. 5 is a partial schematic view of the seat frame assembly, in which a third driving mechanism is omitted;
FIG. 6A is a schematic view of a third connecting rod, a second driving mechanism and a transmission mechanism, FIG. 6B is similar to FIG. 6A, illustrating a schematic view of another embodiment of the transmission mechanism;
FIG. 7A is a simplified schematic view of the seat frame being in the design posture in FIG. 2;
FIG. 7B is similar to FIG. 6A, in which the second driving mechanism is omitted and a schematic view of the design posture is illustrated;
FIG. 8A is a schematic view of the vehicle seat in FIG. 1A being in a side-moving and folded posture with the seat frame according to the present disclosure;
FIG. 8B is a schematic view of the vehicle seat being in the side-moving and folded posture of FIG. 8A joined with a rear seat into a bed;
FIG. 9A is a schematic side view of the seat frame in FIG. 8A being in the side-moving and folded posture;
FIG. 9B is a schematic view of the seat frame assembly of the seat frame being in the side-moving and folded posture shown in FIG. 9A;
FIG. 10A is a simplified schematic view of the seat frame being in the side-moving and folded posture in FIG. 9A;
FIG. 10B is similar to FIG. 7B, illustrating a schematic view of the side-moving and folded posture;
FIG. 11A is a schematic view of the vehicle seat in FIG. 1A being in a side-moving and lying-flat posture with the seat frame according to the present disclosure;
FIG. 11B is a schematic side view of the vehicle seat being in the side-moving and lying-flat posture shown in FIG. 11A;
FIG. 12A is a schematic side view of the seat frame in FIG. 11A being in the lying-flat posture and in a side-moving and zero-pressure posture;
FIG. 12B is a schematic view of the seat frame assembly of the seat frame being in the side-moving and zero-pressure posture in FIG. 12A;
FIG. 13A is a simplified schematic view of the seat frame being in the lying-flat posture and in the side-moving and zero-pressure posture in FIG. 12A;
FIG. 13B is similar to FIG. 7B, illustrating a schematic view of the side-moving and zero-pressure posture;
FIG. 14 and FIG. 15 are similar to FIG. 7A, respectively illustrating different embodiments of the second driving mechanism;
FIG. 16 is similar to FIG. 4, illustrating an exploded schematic view of a seat frame assembly of a seat frame according to another embodiment of the present disclosure;
FIG. 17 is a schematic view of a side-moving sliding rail and a long sliding rail in FIG. 16, illustrating a third driving mechanism;
FIG. 18 is a schematic view of the seat frame assembly arranged on the side-moving sliding rail and the long sliding rail in FIG. 17;
FIG. 19 is a schematic side view of FIG. 18;
FIG. 20A is a simplified schematic view of the seat frame being in a design posture with the seat frame assembly and the side-moving sliding rail as shown in FIG. 19;
FIG. 20B is a simplified schematic view of the seat frame in FIG. 20A being in a side-moving and folded posture;
FIG. 20C is a simplified schematic view of the seat frame in FIG. 20A being in a side-moving and zero-pressure posture;
FIG. 21A is similar to FIG. 20A, illustrating a second driving mechanism of another embodiment;
FIG. 21B is a simplified schematic view of the seat frame in FIG. 21A being in a side-moving and folded posture;
FIG. 21C is a simplified schematic view of the seat frame in FIG. 21A being in a side-moving and zero-pressure posture;
FIG. 22A is similar to FIG. 20A, illustrating a second driving mechanism according to another embodiment;
FIG. 22B is a simplified schematic view of the seat frame in FIG. 22A being in a side-moving and folded posture;
FIG. 22C is a simplified schematic view of the seat frame in FIG. 22A being in the side-moving and zero-pressure posture;
FIG. 23A is similar to FIG. 20A, illustrating a second driving mechanism of another embodiment;
FIG. 23B is a simplified schematic view of the seat frame in FIG. 23A being in a side-moving and folded posture;
FIG. 23C is a simplified schematic view of the seat frame in FIG. 23A being in a side-moving and zero-pressure posture.

### DETAILED DESCRIPTION OF EMBODIMENTS

The implementation and use of the embodiments are discussed in detail below. However, it should be understood that the specific embodiments discussed merely exemplify the specific ways of implementing and using the present disclosure, and do not limit the scope of the disclosure. When describing the structural positions of various components, such as the directions of upper, lower, top, bottom, etc., the description is not absolute, but relative. When the various components are arranged as shown in the figures, these directional expressions are appropriate, but when the positions of the various components in the figures would be changed, these directional expressions would also be changed accordingly.

In this context, the expression "comprise" or similar expression "has" and so on which are synonymous are open, and do not exclude additional unlisted elements or functions.

In this context, the terms "first", "second", "third" and so on are not used to limit the sequence and the number of components unless otherwise stated.

In this context, unless otherwise specifically defined, the terms such as "connect" or "attach" should be understood broadly, for example, it may be fixed connection, detachable connection, or integrated; it may be directly connected, indirectly connected through an intermediate medium, or it may be internal communication between two components or interaction relationship between two components. The term "fixedly connect" may be understood as a fixed connection implemented in any manner, including but not limited to welding or other fixed connections through fasteners. For those skilled in the art, the specific meanings of the above terms in this context can be understood according to specific situations.

It should be understood that, although the embodiments of the seat frame and the seat of the present disclosure described with reference to the drawings are described as applied to a vehicle, the term "means of transportation" mentioned herein includes but is not limited to vehicle, boat, aircraft, etc., wherein "vehicle" includes fuel-powered vehicle, hybrid electric vehicle, electric vehicle, hydrogen-powered vehicle, etc., which may be various types of vehicle without limitation.

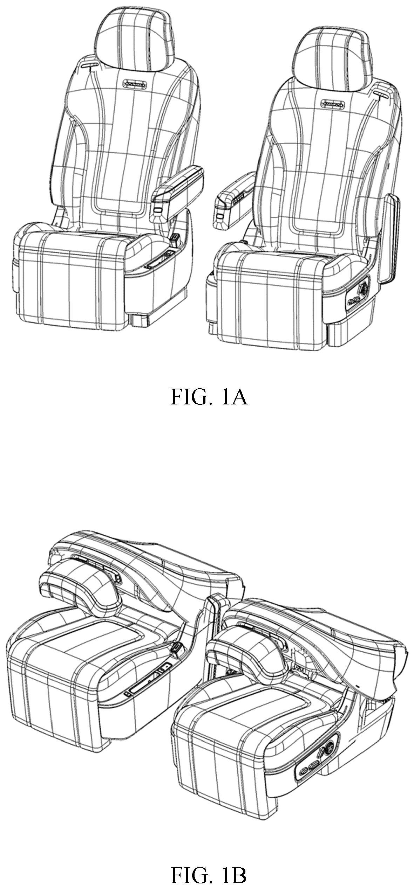

In order to improve riding comfort of vehicle occupants, a seat used in existing vehicle usually has various adjustment functions, such as adjusting the tilt angle of a backrest of the seat, moving a cushion forward and backward, or adjusting zero-pressure of the cushion, etc., so as to allow the occupant to flexibly adjust different postures of the seat according to different requirements. However, when realizing these adjustment functions, there are cases that the seat interferes with adjacent components in the vehicle or a seat frame interferes with its own components, which affects the riding comfort of the occupants. For example, when the backrest of the seat is required to be folded, as shown in FIGS. 1A and 1B, the backrest usually cannot achieve a folded effect at a small angle, that is, an included angle between the backrest and the cushion is usually greater than 15 degrees, which cannot adapt to a scenario where the backrest is folded forward and joined with a rear seat to form a bed. For another example, when the backrest needs to be turned backward into a bed, especially in the case that the seat has a zero-pressure function, backward turning of the backrest and zero-pressure lifting of the cushion will interfere with the side wall of the vehicle body, so that the lying-flat posture or the zero-pressure posture cannot be successfully achieved. The inventor has found that, for the spacing between the vehicle seats, as shown in FIG. 1A, if two seats can be laterally moved to close to each other so as to reduce the spacing therebetween, it is possible to effectively avoid interference with the side wall of the vehicle body during backward turning of the backrest and zero-pressure lifting of the cushion. Further, through reasonable layout of the driving mechanisms that realize the functions of folding, zero-pressure and side-moving, the backrest can also be folded at a smaller angle in the posture of folding forward, for example, the included angle between the backrest and the cushion is less than 5 degrees, so that a large bed effect may be obtained by joining two seats with the rear seats.

Therefore, the present disclosure aims to provide a seat frame. By providing driving mechanisms for achieving functions of folding, zero-pressure and side-moving, and optimizing layout and linkage relationship of each driving mechanism, a seat having the seat frame can realize diversified functions and improve comfort of occupants. It should be understood that the functions of the seat frame are described below in an exemplary manner by combining side-moving with folding or combining side-moving with zero-pressure, and the applicable scenarios of the seat frame according to the concept of the present disclosure include but are not limited to side-moving, folding, zero-pressure, side-moving combined with folding, side-moving combined with zero-pressure etc. depending on different requirements.

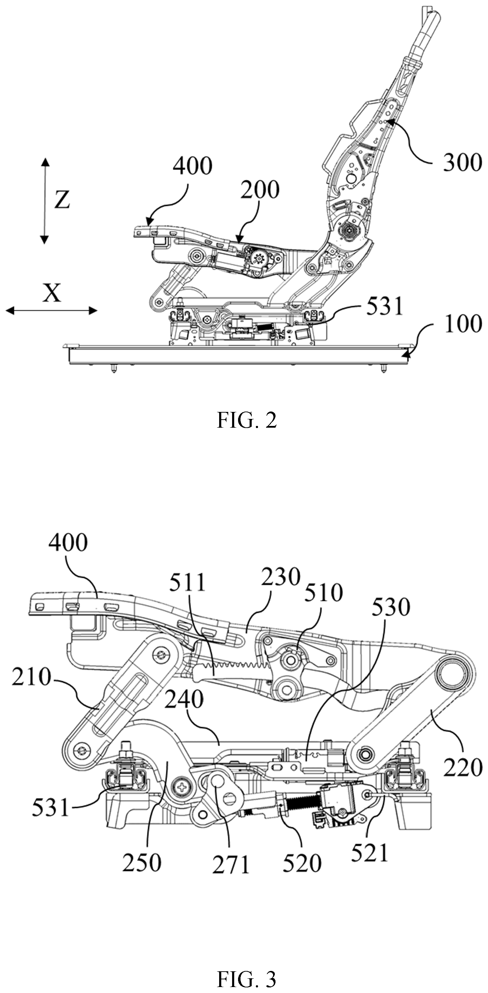

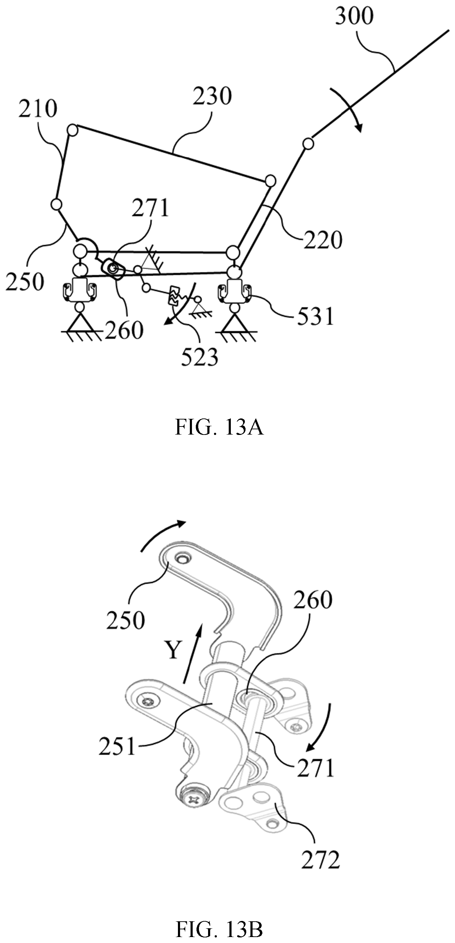

Specifically, referring to an embodiment shown in FIG. 2 to FIG. 13B, a seat frame of the present disclosure includes a seat frame assembly 200, a backrest assembly 300 and a side-moving sliding rail 531. The side-moving sliding rail 531 is attached to a long sliding rail 100 arranged along a longitudinal direction X of a vehicle so as to be adapted for the entire seat frame to move on the long sliding rail 100 along the longitudinal direction X. Here, the longitudinal direction of the vehicle is along a traveling direction of the vehicle, also referred to as a front-rear direction, so as to be suitable for adjustment of a front-rear position of the seat. The side-moving sliding rail 531 is arranged to extend along a side-moving direction Y, and the seat frame assembly 200 is attached to the side-moving sliding rail 531 and can move along the side-moving sliding rail 531 in the side-moving direction Y. Here, the side-moving direction Y is a width direction or a lateral direction of the vehicle, also referred to as a left-right direction, so as to be suitable for adjustment of a left-right position of the seat. It can be conceived that the side-moving sliding rail 531 may also be directly mounted on a vehicle body floor. The side-moving direction Y may also be an oblique direction at an angle to the lengthwise direction of the vehicle, so as to be suitable for adjustment of an oblique position of the seat. The seat frame further includes a driving mechanism, and the driving mechanism includes: a first driving mechanism 510 configured to drive the seat frame assembly 200 to rotate relative to the side-moving sliding rail 531 to a folded position; a second driving mechanism 520 configured to drive the seat frame assembly 200 to rotate relative to the side-moving sliding rail 531 to a zero-pressure position; and a third driving mechanism 530 configured to drive the seat frame assembly 200 to move in the side-moving direction Y to a side-moving position. According to the concept of the present disclosure, regardless of the position at which the seat frame assembly 200 is located, the driving mechanisms do not interfere with each other.

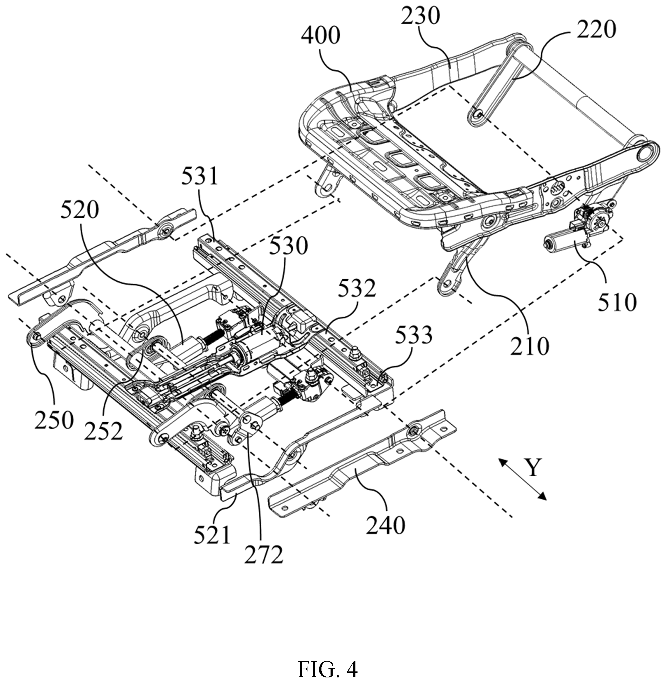

Specifically, in the illustrated embodiment, the side-moving sliding rail 531 includes an upper sliding rail 532 and a lower sliding rail 533 slidably fitted with each other. Here, "upper" and "lower" refer to the vertical direction Z. The seat frame assembly 200 includes a seat frame side plate 230, a vertical plate 240 fixedly connected to the upper sliding rail 532 of the side-moving sliding rail 531, and a pair of connecting rod assemblies arranged opposite each other in a width direction of the vehicle. With reference to FIGS. 3 and 4, the pair of connecting rod assemblies are symmetrical structures, and only the connecting rod assembly at one side is described below for simplicity. Specifically, the connecting rod assembly includes a first connecting rod 210 and a second connecting rod 220. A third connecting rod 250 is pivotably connected to the first connecting rod 210, and the second connecting rod 220 is pivotably connected or hinged to the vertical plate 240. The third connecting rod 250 is configured to be capable of rotating relative to the vertical plate 240. In the illustrated embodiment, two third connecting rods 250 arranged on both sides of the seat frame assembly are fixedly connected by a coupling rod 251, and the coupling rod 251 is pivotally connected to the vertical plate 240.

In some embodiments, the seat frame may further include a seat pan 400 fixedly connected above the seat frame assembly 200. Thus, the seat frame assembly 200 is constructed in a frame shape as shown in FIG. 4 and has a five-link structure constituted by the seat frame side plate 230, the first connecting rod 210, the second connecting rod 220, the third connecting rod 250 and the vertical plate 240 as shown in FIG. 3.

The first driving mechanism 510 may include a motor, wherein an output shaft of the motor is connected with the first connecting rod 210 or the second connecting rod 220 to drive the first connecting rod 210 or the second connecting rod 220 to rotate, so that the seat frame assembly rotates to a folded position. In some embodiments, the first driving mechanism 510 may include a first transmission component 511 extending substantially along the seat frame side plate 230 and driven by the motor, and the first transmission component 511 is connected to the first connecting rod 210 or the second connecting rod 220. In the illustrated embodiment, the first transmission component 511 is constructed as a rack and connected to the second connecting rod 220. When the first transmission component 511 is driven by the motor, the second connecting rod 220 is driven to rotate by movement of the rack, so that the seat frame assembly rotates to the folded position.

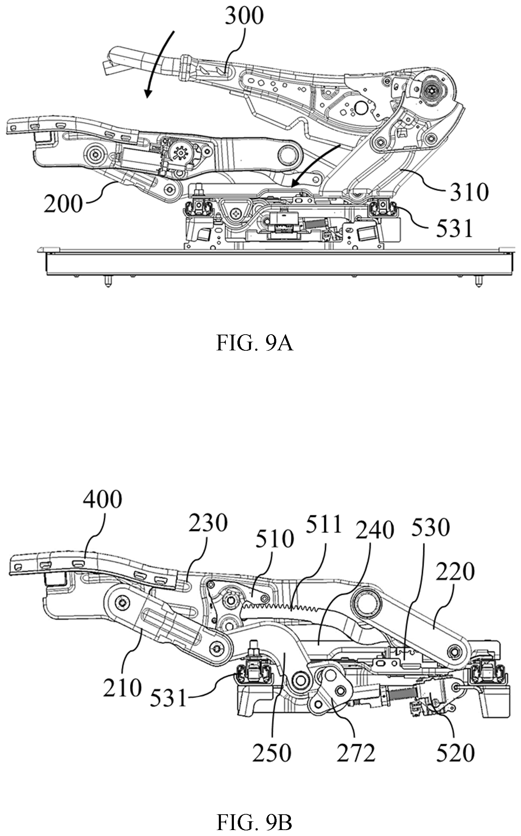

Advantageously, the seat frame assembly 200 is separated from the backrest assembly 300. The backrest assembly 300 can be pivotally connected to the side-moving sliding rail 531. As shown in FIG. 9A, for example, the backrest assembly 300 is pivotally connected to a backrest bracket 310, and the backrest bracket 310 is connected with the vertical plate 240 and separated from the seat frame assembly 200. Thus, the movement of the seat frame assembly 200 and the forward or backward turning action of the backrest assembly 300 are independent from each other without interference. In particular, when the seat frame assembly 200 is folded by means of the first driving mechanism 510, the seat frame assembly 200 can be rotated forward relative to the side-moving sliding rail 531 and closer to the side-moving sliding rail 531 while the backrest assembly 300 is being folded downwardly. This provides more space for folding the backrest assembly 300 downwardly, so that the seat frame in the folded posture can present a relatively flat surface, e.g., the included angle between the backrest assembly 300 and the seat frame assembly 200 is less than 5 degrees, which will be described in detail below.

The third driving mechanism 530 is attached to the side-moving sliding rail 531 and can move along the side-moving sliding rail 531, that is, the entire third driving mechanism 530 moves laterally or leftward/rightward along the side-moving sliding rail 531. In some embodiments, the third driving mechanism 530 includes a motor and a gear box connected with the side-moving sliding rail 531. One end of the gear box is connected with the motor through a flexible shaft, and another end thereof is connected with a screw rod arranged in the side-moving sliding rail 531. The motor drives the gear box to move relative to the screw rod, so that the seat frame assembly 200 moves along the side-moving sliding rail 531 in the side-moving direction Y.

In the illustrated embodiment, the first connecting rod 210 is away from the backrest assembly 300 compared with the second connecting rod 220. The second driving mechanism 520 drives the seat frame assembly 200 to rotate relative to the side-moving sliding rail 531, which mainly realizes zero-pressure lifting of an end of the seat frame assembly 200 near the front of the vehicle.

As mentioned above, in the folded posture, the seat frame assembly 200 can advantageously provide more space for folding the backrest assembly 300 downwardly, which requires that the seat frame assembly 200 will not interfere with its own driving mechanism and corresponding connecting rod assembly when it realizes the folding function. When a side-moving mechanism is provided, the case of component interference needs to be avoided in particular.

Therefore, in the embodiment shown in FIG. 2 to FIG. 15, the third connecting rod 250 is connected with the second driving mechanism 520 through a transmission mechanism. In the vertical direction Z, the position of the second driving mechanism 520 is lower than that of the third driving mechanism 530. That is, as shown in FIG. 3, the second driving mechanism 520 is located below the third driving mechanism 530, so as to avoid the third driving mechanism 530 together with the seat frame assembly 200 from interfering with the second driving mechanism 520 when they move along the side-moving sliding rail 531 in the side-moving direction Y. Advantageously, in the illustrated embodiment, the second driving mechanism 520 is mounted on the lower sliding rail 533 of the side-moving sliding rail 531, and the third driving mechanism 530 is mounted on the upper sliding rail 532 of the side-moving sliding rail 531 and can move relative to the lower sliding rail 533. That is, during a process in which the seat frame assembly 200 moves along the side-moving sliding rail 531, the second driving mechanism 520 according to this embodiment does not move together with the seat frame assembly 200.

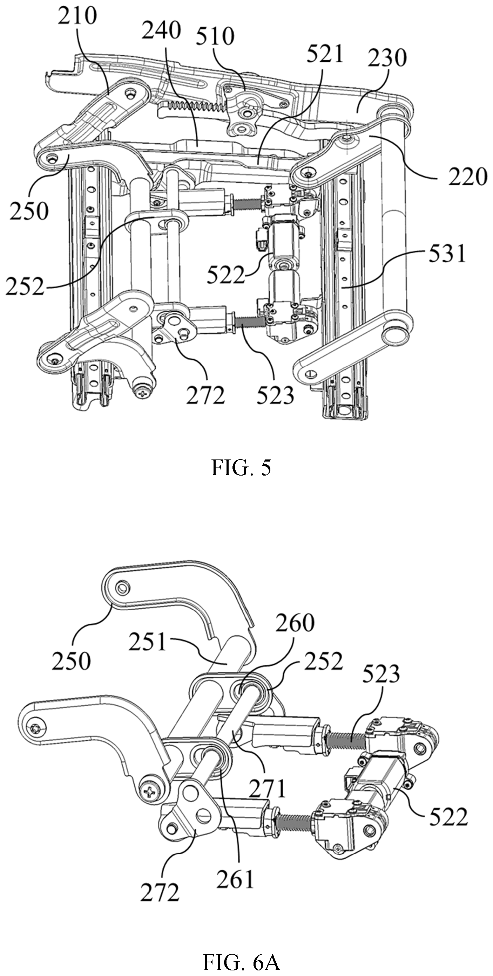

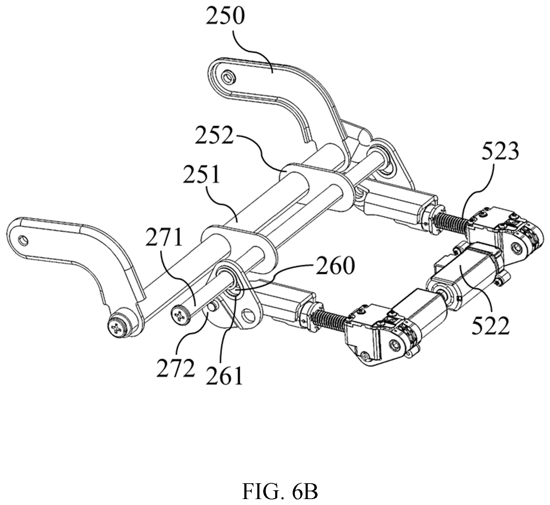

In this case, the third connecting rod 250 is connected to the transmission mechanism through a coupling rod 251. Specifically, referring to the embodiment shown in FIGS. 4 to 6A, the transmission mechanism includes a connecting component 252 connected to the coupling rod 251, an adapter piece 272 pivotally connected to the second driving mechanism 520 and a linkage rod 271. In the embodiment shown in FIG. 6A, the linkage rod 271 is fixedly connected to the adapter piece 272 and slidably connected to the connecting component 252. Optionally, in another embodiment shown in FIG. 6B, the linkage rod 271 is fixedly connected to the connecting component 252 and slidably connected to the adapter piece 272. Specifically, in some embodiments, the connecting component 252 is provided with a sliding groove 260 as shown in FIG. 6A, or the adapter piece 272 is provided with a sliding groove 260 as shown in FIG. 6B. Thus, when the seat frame assembly 200 moves along the side-moving sliding rail 531, the connecting component 252 moves relative to the linkage rod 271 and then moves relative to the adapter piece 272 (FIG. 6A), or the connecting component 252 together with the linkage rod 271 move relative to the adapter piece 272 (FIG. 6B). Regardless of the arrangement, when the second driving mechanism 520 drives the adapter piece 272 to rotate, the third connecting rod 250 can be driven to rotate, so that the third connecting rod 250 can transmit a driving force of the second driving mechanism 520 from below the third driving mechanism 530 to the first connecting rod 210. In this way, the driving force of the second driving mechanism 520 that is sunk in structure is advantageously transmitted to the first connecting rod 210 by sliding and hinged manner through a simple structure with fewer components within limited space, which effectively and reliably solves the problem that the second driving mechanism 520 cannot successfully achieve zero-pressure lifting in the case of side-moving due to being sunk in structure, and achieves reliable transmission of the driving force while obtaining stable and reliable movement of associated components. In addition, the folding action of the backrest assembly will not interfere with the second driving mechanism due to the sinking layout of the second driving mechanism. Thus, the backrest assembly can be folded forward until the included angle between the seat frame assembly and the backrest assembly is less than 5 degrees, which is convenient for joining with the rear seat to realize the large bed scenario.

In some embodiments, the second driving mechanism 520 may be fixedly connected to the lower sliding rail 533 of the side-moving sliding rail 531 through a mounting bracket 521, and the adapter piece 272 is pivotally connected with the mounting bracket 521, so that the second driving mechanism 520 can drive the adapter piece 272 to rotate relative to the mounting bracket 521.

In some embodiments, the second driving mechanism 520 includes a motor 522 and a second transmission component driven by the motor 522. The second transmission component is driven to move the adapter piece 272 further to rotate the third connecting rod 250 and the first connecting rod 210. Alternatively, the second transmission component may include any one of angle adjuster, screw rod, rack and tooth plate. In the embodiment shown in FIG. 2 to FIG. 12B, the second driving mechanism 520 may be constructed as a push rod motor including a screw rod 523 connected with the motor 522 and a push rod threadingly connected with the screw rod, wherein the push rod is pivotally connected with the adapter piece 272, so that the motor 522 drives the screw rod 523 to rotate and drive the push rod to move on the screw rod 523 to make the adapter piece 272 rotate.

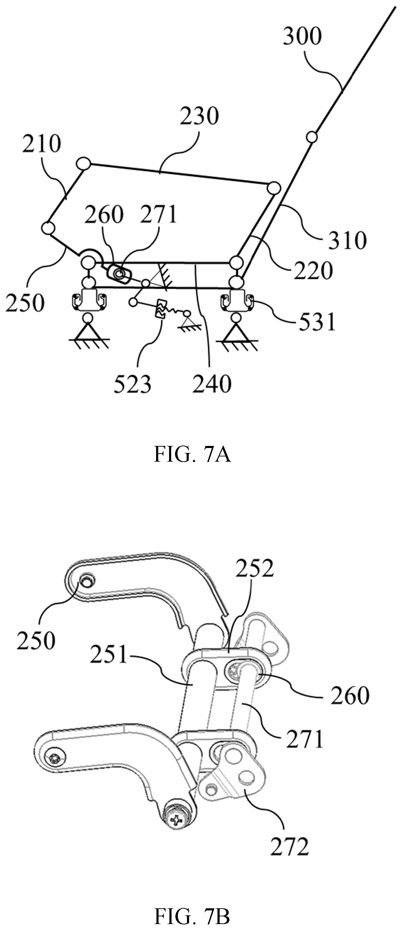

Hereinafter, the actions and functions of the seat frame with the above configuration in different postures will be described with reference to FIGS. 7A to 12B.

First, referring to FIGS. 7A and 7B corresponding to the design postures shown in FIGS. 2 and 3. In the design posture, the included angle between the backrest assembly 300 and the seat frame assembly 200 is approximately 100 to 120 degrees, the third connecting rod 250 and the transmission mechanism (the connecting component 252, the linkage rod 271 and the adapter piece 272) are in an initial state. In this case, the seat can be normally occupied by the occupant.

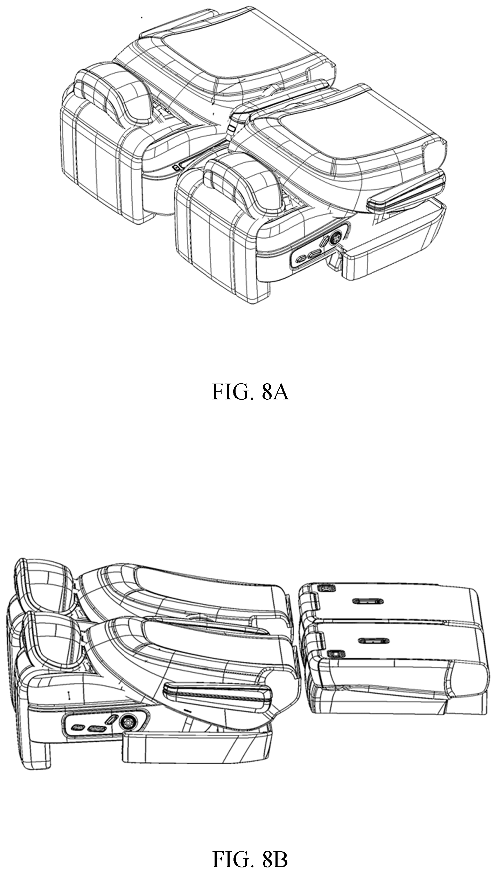

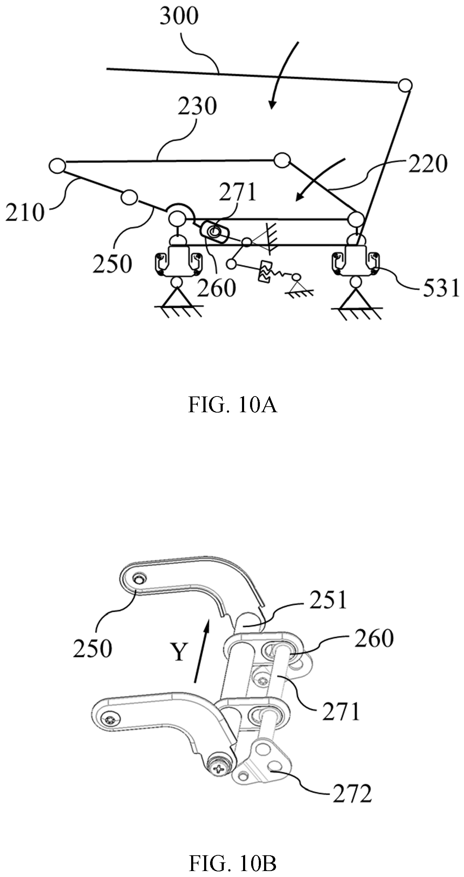

When the backrest needs to be folded forward to be joined with a rear seat into a bed, especially when two seats as shown in FIGS. 8A and 8B move sideways and close to each other to achieve a large bed function, the backrest assembly 300 is rotated and folded counterclockwise as shown in FIG. 9A, while the first connecting rod 210 and the second connecting rod 220 are also rotated counterclockwise relative to the side-moving sliding rail 531, and the seat frame assembly 200 moves sideways along the side-moving direction Y, as shown in FIGS. 10A and 10B, at this time, the third connecting rod 250 only moves sideways along the side-moving direction Y. Since the second driving mechanism 520 is located below the third driving mechanism 530, it further provides more space for folding of the seat frame assembly 200 without interfering with movement of the third driving mechanism 530 along the side moving direction Y. In this way, after the backrest assembly 300 and the seat frame assembly 200 are folded, the included angle between the backrest assembly 300 and the seat frame assembly 200 can be less than 5 degrees, which can meet a comfort requirement of occupants in the large bed scenario.

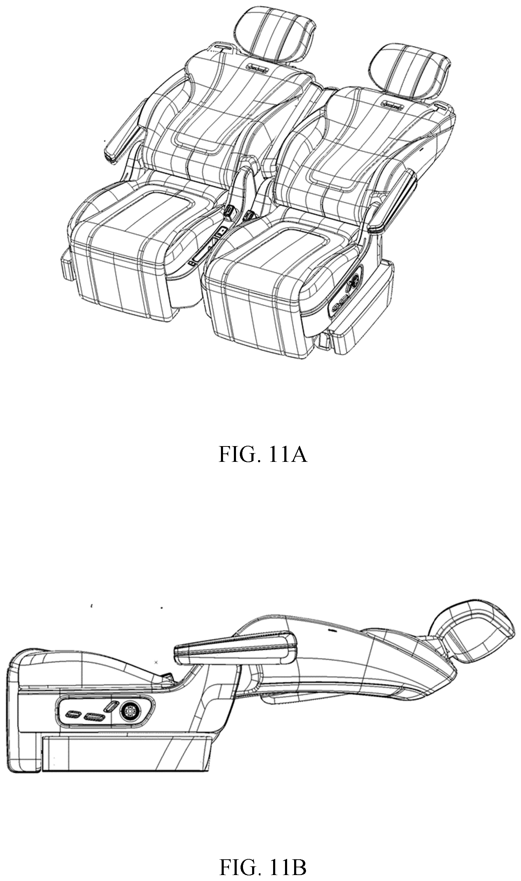

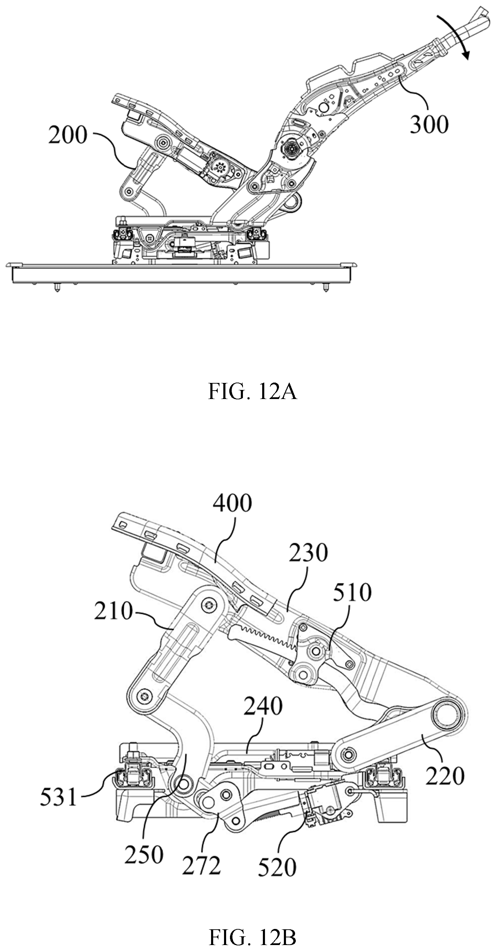

When the backrest needs to be turned backward to achieve a lying-flat posture, especially when two seats as shown in FIGS. 11A and 11B move sideways and close to each other to achieve a dual bed function, the backrest assembly 300 is turned clockwise as shown in FIG. 12A. In this case, two postures may be realized according to different requirements. For example, the lying-flat posture shown in FIG. 11B can be achieved only, and at this time, the third connecting rod 250 and the transmission mechanism may only move sideways along the side-moving direction Y as shown in FIG. 10B. Alternatively, the second driving mechanism 520 drives the seat frame assembly 200 to rotate relative to the side-moving sliding rail 531 to achieve a zero-pressure posture. As shown in FIGS. 12A to 13A, when the zero-pressure is started, under the driving of the second driving mechanism 520, for example, the adapter piece 272 is driven to rotate in a clockwise direction in the figure and thus the linkage rod 271, the coupling rod 251 and the third connecting rod 250 fixedly connected thereto are further driven to rotate in the same direction as that of the adapter piece 272. The downward movement of the linkage rod 271 causes the coupling rod 251 and the third connecting rod 250 fixedly connected thereto to move upwardly, thereby lifting up the first connecting rod 210. Compared with the initial state, a front end of the seat frame assembly 200 is lifted by about 10 to 20 degrees. The seat can be adapted for ergonomics to provide uniform and comfortable support for legs of the occupant, reduce the pressure on the body of the occupant and improve comfort. Meanwhile, the third driving mechanism 530 drives the seat frame assembly 200 to move along the side-moving direction Y, so that the two seats can be brought close together to achieve the dual bed function as shown in FIG. 11A.

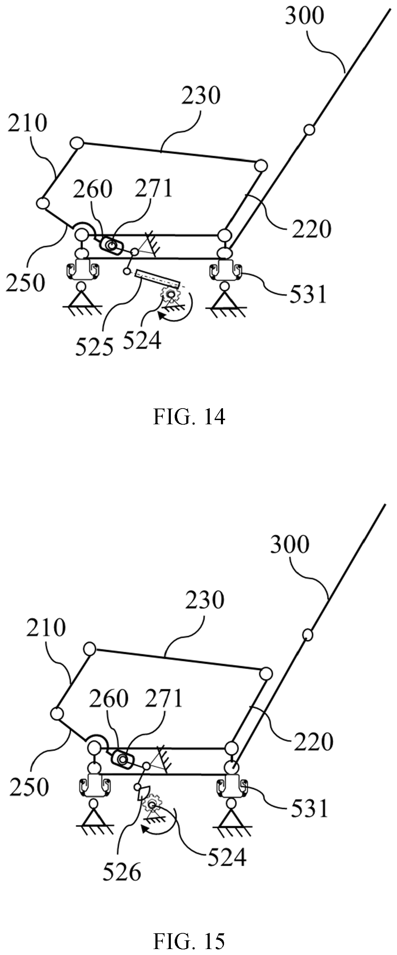

FIGS. 14 and 15 respectively illustrate other optional ways of the second driving mechanism by way of example. In FIG. 14, the second driving mechanism may include a motor, a gear 524 connected to an output shaft of the motor and a rack 525 connected to the adapter piece 272, the gear 524 is engaged with the rack 525. When the motor drives the gear 524 to rotate, the adapter piece 272 is driven to rotate by movement of the rack 525. In FIG. 15, the second driving mechanism includes a motor, a gear 524 connected to an output shaft of the motor and a toothed plate 526 connected to the adapter piece 272, the gear 524 is engaged with the toothed plate 526. When the motor drives the gear 524 to rotate, the adapter piece 272 is driven to rotate by rotation of the toothed plate 526. In these two embodiments, each connecting rod and transmission mechanism of the seat frame assembly 200 may be implemented in a manner as described above to realize corresponding driving force transmission, which will not be repeated herein.

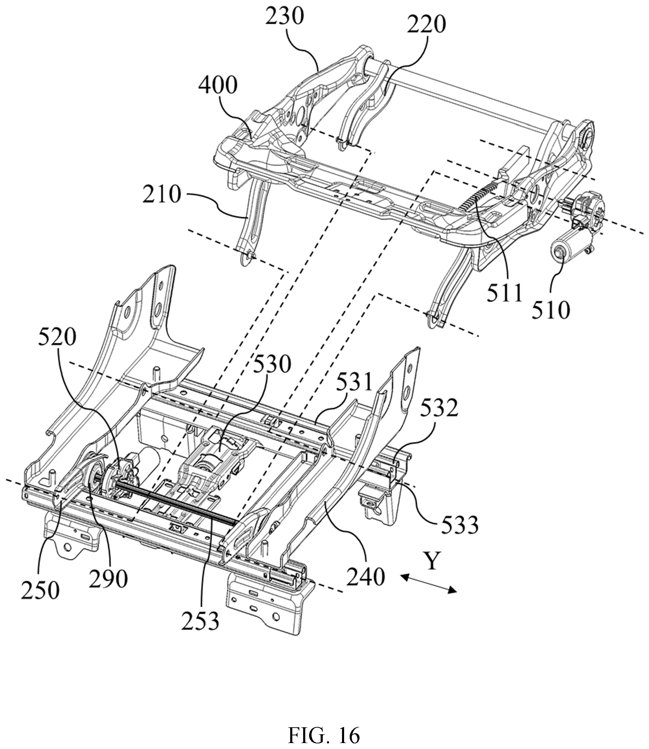

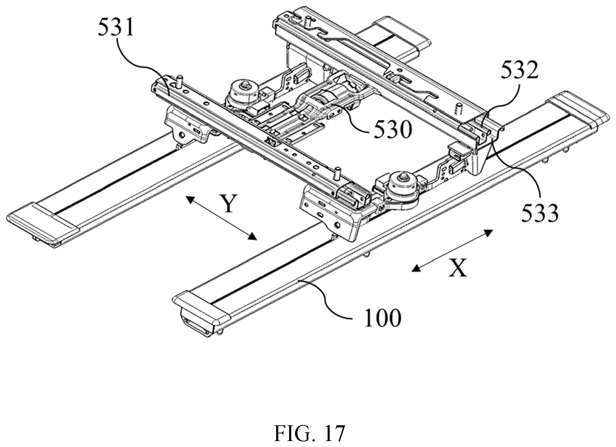

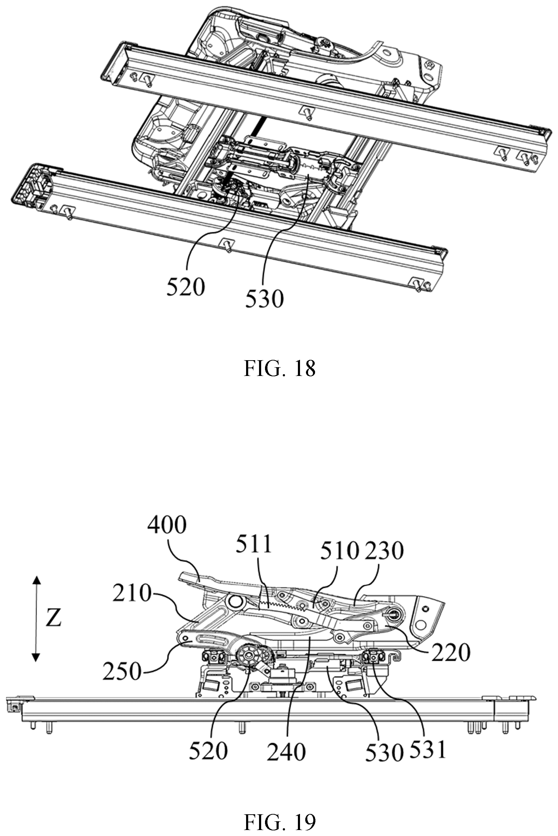

FIGS. 16 to 23C illustrate a seat frame assembly in another embodiment, which is different from the above-mentioned embodiments in that the second driving mechanism 520 is arranged above the third driving mechanism 530. In this way, the second driving mechanism 520 also does not interfere with the movement of the third driving mechanism 530 and the seat frame assembly along the side-moving sliding rail in the side-moving direction Y, and can provide more space for folding of the seat frame assembly.

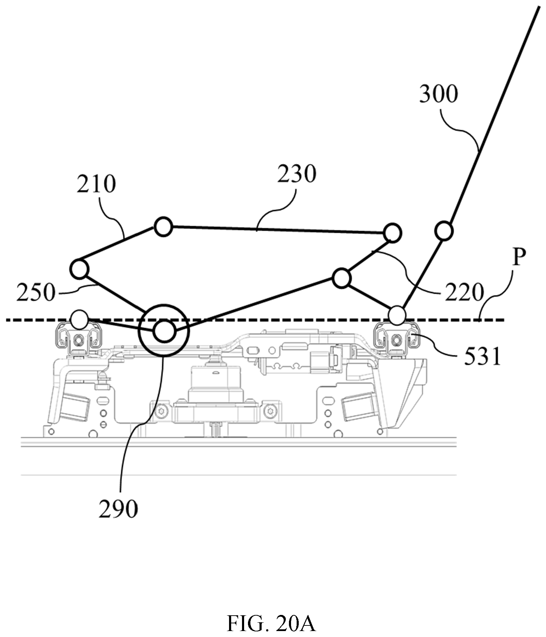

With reference to FIG. 16 to FIG. 19, for the sake of brevity, the same or similar components as those in the above embodiments will not be described in detail. In this embodiment, the second driving mechanism 520 is fixedly mounted on the vertical plate 240 and the vertical plate 240 is fixedly connected with the upper sliding rail 532 of the side-moving sliding rail 531. It can be appreciated that the second driving mechanism 520 may also be fixedly mounted on the upper sliding rail 532. The third driving mechanism 530 is mounted on the lower sliding rail 533 of the side-moving sliding rail 531 and still can move along the side-moving sliding rail 531, only being sunk below the side-moving sliding rail 531 relative to the embodiment shown in FIG. 4. It should be understood that the cushion has a depression limiting surface P, which refers to an upper surface of the upper sliding rail 532. As shown in FIG. 20A, it should be ensured that the second driving mechanism 520 cannot move upwardly to exceed the depression limiting surface P.

The third connecting rod 250 is pivotally connected to the vertical plate 240 via an angle adjuster 290 and also configured to transmit the driving force of the second driving mechanism 520 to the first connecting rod 210. Specifically, the third connecting rod 250 is fixedly connected to a movable disc in the angle adjuster 290, and the vertical plate 240 is fixedly connected to a stationary disc in the angle adjuster 290.

In this embodiment, the second driving mechanism 520 includes a direct-drive motor, and the direct-drive motor is connected to the angle adjuster 290 through a synchronous rod 253 so as to drive the movable disc of the angle adjuster 290 to rotate relative to the stationary disc, thereby driving the third connecting rod 250 to rotate relative to the vertical plate 240, such that the third connecting rod 250 can transmit the driving force of the second driving mechanism 520 to the first connecting rod 210.

FIGS. 20A to 20C respectively illustrate the actions and functions of the seat frame constructed by the embodiment shown in FIG. 16 in different postures.

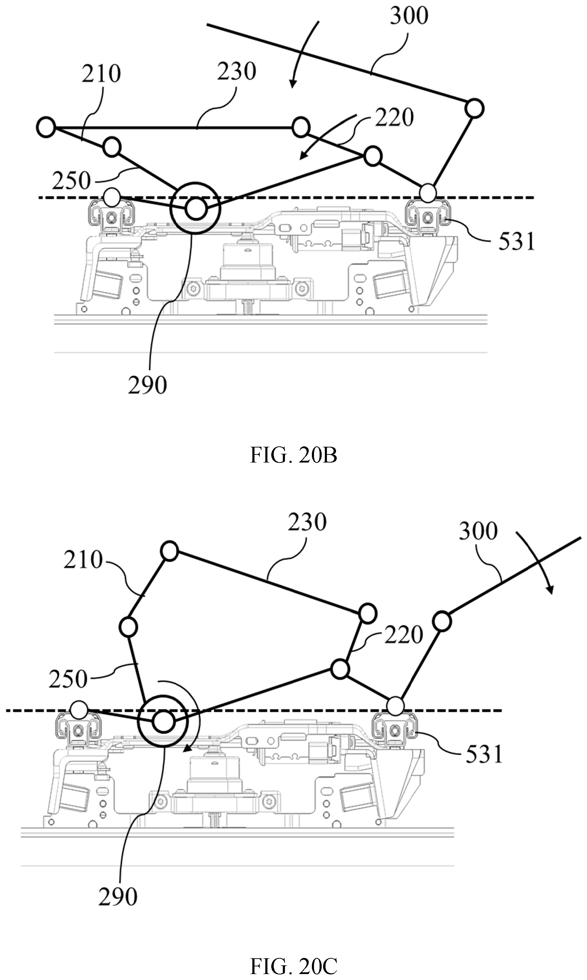

Similarly, FIG. 20A corresponds to the design posture. The third connecting rod 250 and the angle adjuster 290 are in the initial state, and at this time, the seat can be normally occupied by the occupant. When the backrest needs to be folded forward and moved sideways and close to each other to achieve a large bed function, the backrest assembly 300 is rotated and folded in a counterclockwise direction as shown in FIG. 20B, while the seat frame assembly 200 is rotated and folded in the same direction relative to the side-moving sliding rail 531, and moves sideways along the side-moving direction. When the backrest needs to be turned backward and moved sideways and close to each other to achieve a dual bed function, as shown in FIG. 20C, the backrest assembly 300 is turned clockwise. At this time, the movable disc in the angle adjuster 290 of the second driving mechanism rotates clockwise relative to the stationary disc and drives the third connecting rod 250 to move upwardly, thereby lifting up the first connecting rod 210 to provide the zero-pressure function.

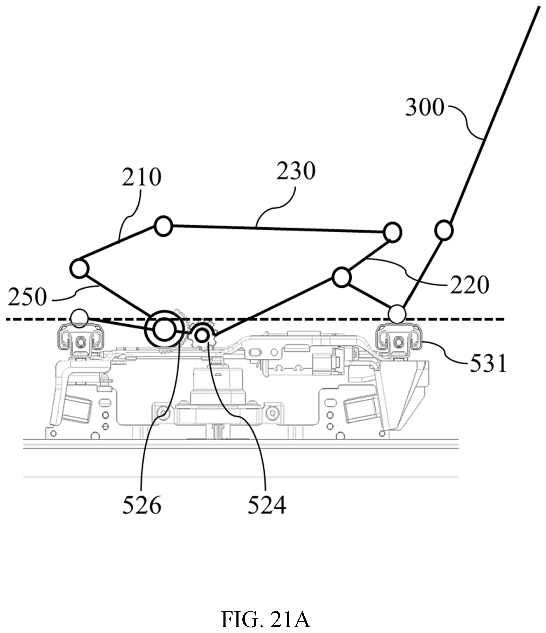

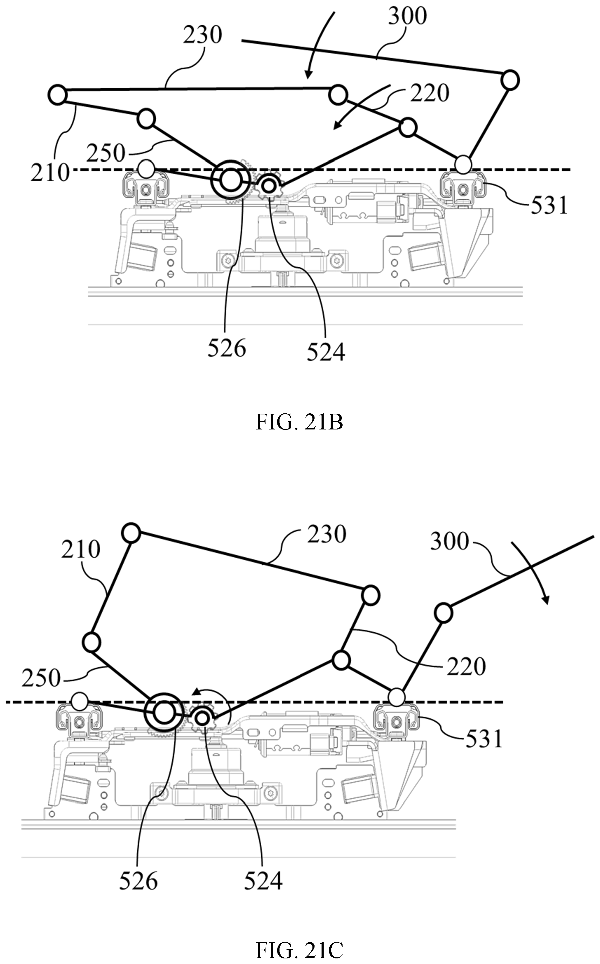

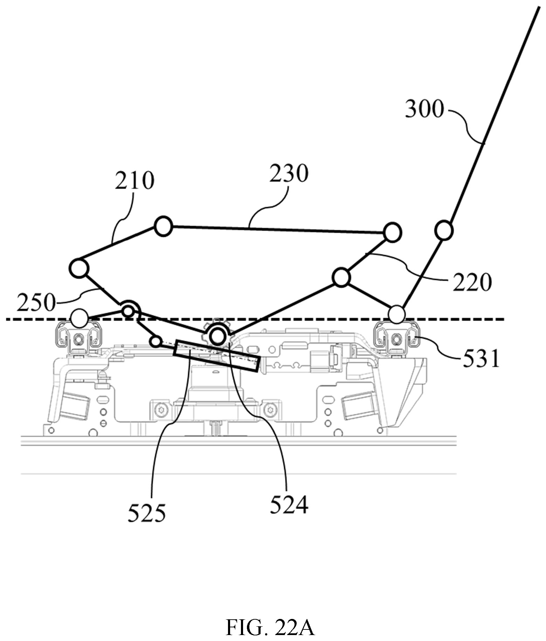

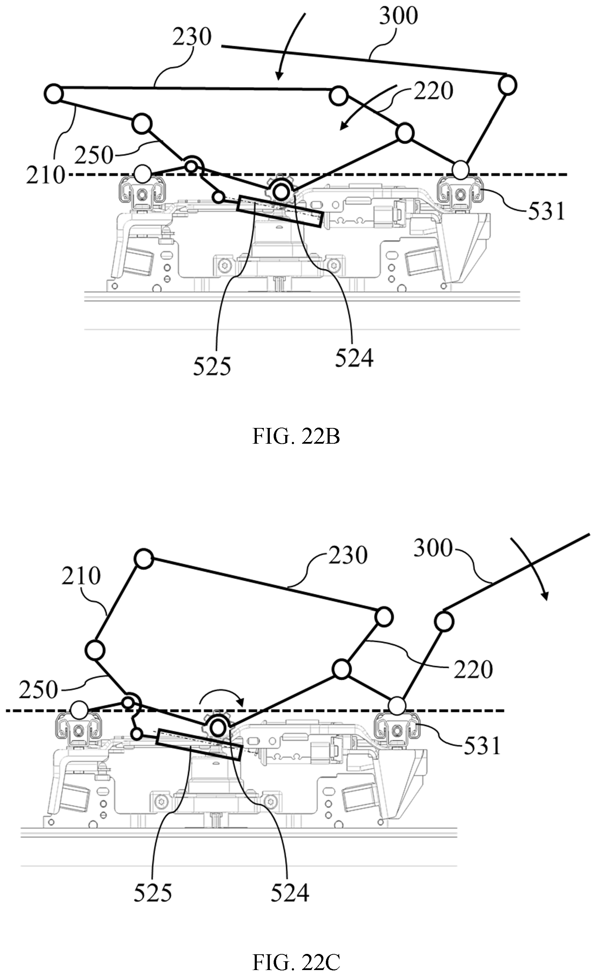

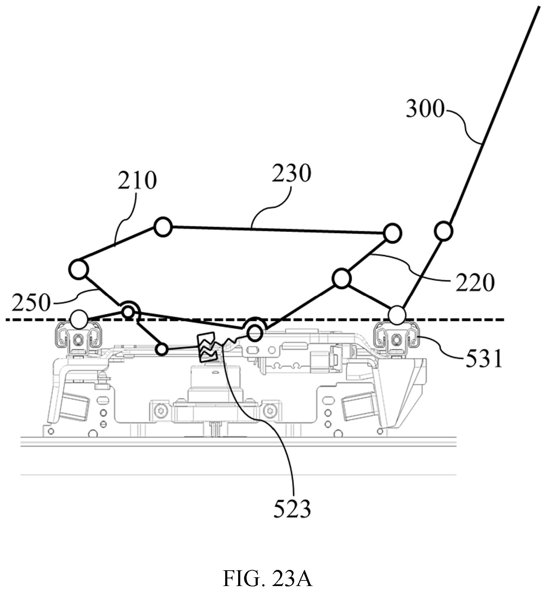

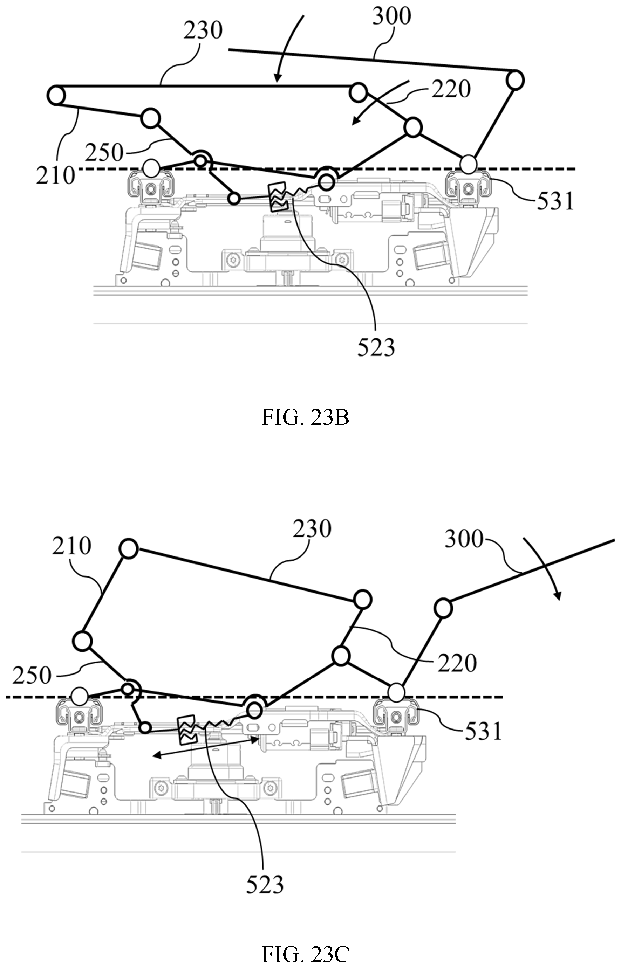

FIG. 21A to FIG. 23C respectively illustrate other optional ways of the second driving mechanism, and corresponding actions and implemented functions are not repeated herein. In the way shown in FIGS. 21A to 21C, the second driving mechanism may include a motor, a gear 524 connected with an output shaft of the motor, and a toothed plate 526 engaged with the gear 524 and connected with the third connecting rod 250. When the gear 524 is driven by the motor to rotate, the third connecting rod 250 is driven to rotate through rotation of the toothed plate 526. In the way shown in FIGS. 22A to 22C, the second driving mechanism may include a motor, a gear 524 connected with an output shaft of the motor and a rack 525 engaged with the gear 524 and connected with the third connecting rod 250. When the motor drives the gear 524 to rotate, the third connecting rod 250 is driven to rotate by movement of the rack 525. In the way shown in FIGS. 23A to 23C, the second driving mechanism may include a motor and a screw rod 523 connected with the motor, wherein the screw rod 523 is pivotally connected with the third connecting rod 250 to drive the third connecting rod 250 to rotate.

Regardless of the construction or layout, the seat frame of the present disclosure integrates side-moving function, folding function and zero-pressure function within the limited space, obtains larger folding space on the premise of avoiding component interference, and satisfies multiple application scenarios such as large bed or dual bed for the occupants. Depending on different requirements, the seat having the seat frame of the present disclosure can reliably meet diversified adjustment demands and meanwhile have stability and comfort.

It is to be understood that the embodiments shown in the drawings only illustrate optional architectures, shapes, sizes and arrangements of various optional components of a seat frame according to the present disclosure; however, it is only illustrative rather than restrictive, and other shapes, sizes and arrangements can be adopted without departing from the spirit and scope of the present disclosure.

It should be noted that the disclosure (for example, disclosed concepts and so on) has been described in the specification of this patent document and/or illustrated in the drawings according to exemplary embodiments; the embodiments of the disclosure are merely proposed by way of examples, and do not intend to limit the scope of the disclosure. The structure and/or arrangement of elements embodying the disclosed concepts in this disclosure as described herein and/or illustrated in the drawings are merely illustrative. Although the exemplary embodiments of the present disclosure have been described in detail in this patent document, it will be readily appreciated by those skilled in the art that equivalents, modifications and variations on the subject matter of the exemplary embodiments and alternative embodiments are possible and considered to fall within the scope of the present disclosure; all such subject matters (e.g., modifications, variations, embodiments, combinations, equivalents, etc.) are intended to be encompassed within the scope of the present disclosure. It should also be noted that various/other modifications, variations, substitutions, equivalents, changes, omissions, and the like can be made in the configuration and/or arrangement of the exemplary embodiments (e.g., in terms of concepts, designs, structures, arrangements, forms, assemblies, constructions, means, functions, systems, processes/methods, steps, order of process/method steps, operations, operating conditions, performance, materials, compositions, combinations, etc.) without departing from the scope of the invention; and all such subject matter (e.g., modifications, variations, embodiments, combinations, equivalents, etc.) is intended to be included within the scope of the invention. The scope of the present disclosure is not intended to be limited to the subject matter (e.g., the details, structures, functions, materials, acts, steps, sequences, systems, results, etc.) described in the specification and/or drawings of this patent document. It is appropriate that the claims of this patent document be construed to cover the full breadth of the subject matter of the present disclosure (e.g., including any and all such modifications, variations, embodiments, combinations, equivalents, etc.); it is to be understood that the terminology used in this patent document is intended to provide a description of the subject matter of the exemplary embodiments and is not intended to limit the scope of the present disclosure.

It should also be noted that, in accordance with exemplary embodiments, the present disclosure can comprise conventional techniques (e.g., techniques embodied in, and/or integrated with, exemplary embodiments, modifications, variations, combinations, equivalents), or can comprise any other suitable technique (now and/or in the future) having the capability to perform the functions and processes/operations described in the specification and/or illustrated in the drawings. All such techniques, e.g., technologies implemented in examples, adaptations, variations, combinations, equivalents, etc., are considered to be within the scope of the invention of this patent document.

## Claims

1. A seat frame of a means of transportation, comprising a seat frame assembly (200), a backrest assembly (300) and a side-moving sliding rail (531), wherein the seat frame further comprises a driving mechanism, and the driving mechanism comprises:
a first driving mechanism (510) configured to drive the seat frame assembly (200) to rotate relative to the side-moving sliding rail (531) to a folded position;
a second driving mechanism (520) configured to drive the seat frame assembly (200) to rotate relative to the side-moving sliding rail (531) to a zero-pressure position; and
a third driving mechanism (530) configured to drive the seat frame assembly (200) to move along the side-moving sliding rail (531) in a side-moving direction (Y) to a side-moved position.

2. The seat frame of a means of transportation according to claim 1, wherein the seat frame assembly (200) comprises a seat frame side plate (230), a vertical plate (240) fixedly connected with an upper sliding rail (532) of the side-moving sliding rail (531), and a pair of connecting rod assemblies arranged opposite each other, each connecting rod assembly comprises a first connecting rod (210) and a second connecting rod (220) respectively pivotally connected with the seat frame side plate (230), and a third connecting rod (250) pivotally connected with the first connecting rod (210), the second connecting rod (220) is pivotally connected with the vertical plate (240), and the third connecting rod (250) is capable of being rotated relative to the vertical plate (240).

3. The seat frame of a means of transportation according to claim 2, wherein two third connecting rods (250) of the pair of connecting rod assemblies are fixedly connected by a coupling rod (251), and the coupling rod (251) is pivotally connected with the vertical plate (240).

4. The seat frame of a means of transportation according to claim 3, wherein the third connecting rod (250) is connected with the second driving mechanism (520) through a transmission mechanism, and in a vertical direction (Z), a position of the second driving mechanism (520) is lower than that of the third driving mechanism (530) so as to avoid interference between the third driving mechanism (530) and the second driving mechanism (520) when the third driving mechanism (530) moves along the side-moving sliding rail (531) together with the seat frame assembly (200) in the side-moving direction (Y).

5. The seat frame of a means of transportation according to claim 4, wherein the transmission mechanism comprises a connecting component (252) fixedly connected with the coupling rod (251), an adapter piece (272) pivotally connected with the second driving mechanism (520), and a linkage rod (271) fixedly connected with one of the connecting component (252) and the adapter piece (272) and slidably connected with the other of the connecting component (252) and the adapter piece (272); and wherein when the second driving mechanism (520) drives the adapter piece (272) to rotate, the third connecting rod (250) is driven to rotate, and when the third driving mechanism (530) drives the third connecting rod (250) to move in the side-moving direction (Y), the connecting component (252) is driven to move relative to the adapter piece (272) in the side-moving direction (Y).

6. The seat frame of a means of transportation according to claim 5, wherein one of the connecting component (252) and the adapter piece (272) is provided with a sliding groove (260), and the linkage rod (271) passes through the sliding groove (260) and is fixedly connected with the other of the connecting component (252) and the adapter piece (272); optionally, a bearing sleeve is arranged on the linkage rod (271) or in the sliding groove (260).

7. The seat frame of a means of transportation according to claim 5, wherein the second driving mechanism (520) is mounted on a mounting bracket (521) fixedly connected with a lower sliding rail (533) of the side-moving sliding rail (531), the adapter piece (272) is pivotally connected with the mounting bracket (521), and the second driving mechanism (520) drives the adapter piece (272) to rotate relative to the mounting bracket (521).

8. The seat frame of a means of transportation according to claim 5, wherein the second driving mechanism (520) comprises a motor (522), a screw rod (523) connected with the motor (522) and a push rod threadedly connected with the screw rod (523), the push rod is pivotally connected with the adapter piece (272), the motor (522) drives the screw rod (523) to rotate and drives the push rod to move on the screw rod (523) so as to make the adapter piece (272) rotate; or
the second driving mechanism (520) comprises a motor, a gear (524) connected with an output shaft of the motor and a rack (525) connected with the adapter piece (272), the gear (524) is engaged with the rack (525), and the motor drives the gear (524) to rotate so as to drive the adapter piece (272) to rotate by movement of the rack (525); or
the second driving mechanism (520) comprises a motor, a gear (524) connected with an output shaft of the motor and a toothed plate (526) connected with the adapter piece (272), the gear (524) is engaged with the toothed plate (526), and the motor drives the gear (524) to rotate so as to drive the adapter piece (272) to rotate by rotation of the toothed plate (526).

9. The seat frame of a means of transportation according to claim 4, wherein the second driving mechanism (520) is mounted on a lower sliding rail (533) of the side-moving sliding rail (531), and the third driving mechanism (530) is mounted on an upper sliding rail (532) of the side-moving sliding rail (531).

10. The seat frame of a means of transportation according to claim 2, wherein the third connecting rod (250) is pivotally connected with the vertical plate (240) by an angle adjuster (290).

11. The seat frame of a means of transportation according to claim 10, wherein the second driving mechanism (520) comprises a direct-drive motor, and the direct-drive motor is connected with the angle adjuster (290) through a synchronous rod (253) for driving the angle adjuster (290) to rotate so as to drive the third connecting rod (250) to rotate relative to the vertical plate (240).

12. The seat frame of a means of transportation according to claim 2, wherein the second driving mechanism (520) is fixedly mounted on the vertical plate (240) or mounted on an upper sliding rail (532) of the side-moving sliding rail (531), and the third driving mechanism (530) is mounted on a lower sliding rail (533) of the side-moving sliding rail (531).

13. The seat frame of a means of transportation according to claim 2, wherein the first driving mechanism (510) comprises a motor, a gear connected with an output shaft of the motor and a rack connected with the first connecting rod (210) or the second connecting rod (220), the gear is engaged with the rack, and the motor drives the gear to rotate so as to drive the first connecting rod (210) or the second connecting rod (220) to rotate by movement of the rack, such that the seat frame assembly (200) rotates to the folded position.

14. The seat frame of a means of transportation according to claim 1, wherein the third driving mechanism (530) comprises a motor and a gearbox, the gearbox is connected with the motor through a flexible shaft and is connected with a screw rod arranged in the side-moving sliding rail (531), the motor drives the gearbox to move relative to the screw rod so that the seat frame assembly (200) moves along the side-moving sliding rail (531) in the side-moving direction (Y).

15. The seat frame of a means of transportation according to claim 1, wherein the backrest assembly (300) is pivotally connected with the side-moving sliding rail (531) so that the movement of the seat frame assembly (200) and the movement of the backrest assembly (300) are independent from each other.
